# EUROPEAN PATENT SPECIFICATION

(11) **EP 1 609 137 B1**
(45) Date of publication and mention of the grant of the patent: **25.04.2007**
(21) Application number: 04719552.4
(22) Date of filing: 11.03.2004
(51) Int. Cl.: G11B 7/007

(54) **MULTILAYER OPTICAL DISC HAVING PREGROOVE MODULATION**
MEHRLAGIGE OPTISCHE PLATTE MIT MODULATION DER SPURRILLE
DISQUE OPTIQUE MULTICOUCHES A MODULATION DE PRE-SPIRALE

(30) Priority: 24.03.2003 EP 03100749
(43) Date of publication of application: 28.12.2005
(73) Proprietor: Koninklijke Philips Electronics N.V., 5621 BA Eindhoven (NL)
(72) Inventor: WOERLEE, Pierre, H., NL-5656 AA Eindhoven (NL); KOPPERS, Wilhelmus, R., NL-5656 AA Eindhoven (NL); MARTENS, Hubert, C., F., NL-5656 AA Eindhoven (NL); VAN DEN OETELAAR, Ronald, J., A., NL-5656 AA Eindhoven (NL); SPRUIT, Johannes, H., M., NL-5656 AA Eindhoven (NL)
(74) Representative: Uittenbogaard, Frank
(86) International application number: PCT/IB2004/050228
(87) International publication number: WO 2004/086381

(56) References cited:
- EP-A- 0 325 330
- EP-A- 1 291 854
- WO-A-00/43996
- US-A1- 2002 048 238
- US-A1- 2003 007 432

## Description

The invention relates to a record carrier of a writable type for recording information by writing marks in a track.

The invention further relates to a device for scanning the record carrier and a method for providing information via the record carrier.

An optical record carrier is known from WO00/43996. The record carrier comprises a guide groove, usually called pregroove, for indicating the position of tracks in which the information is to be represented in a predefined manner by recording optically readable marks. The pregroove is meandering by a periodic excursion of the track in a direction transverse to the longitudinal scanning direction (further denoted as wobble). The wobble comprises a wobble modulation, for example by inversing wobble periods in phase according to additional information such as physical addresses or recording control information. A scanning device is provided with a head for generating a beam of radiation for scanning the track. The marks are detected during said scanning by variations of the reflectivity of the scanned surface. The variations in intensity of the reflected radiation are detected by a main detector system. Furthermore the scanning device has auxiliary detectors for generating tracking servo signals based on the pregroove for detecting a spatial deviation of the head with respect to the track. The tracking servo signals are used to control actuators to position the head on the track. The wobble modulation is detected via the auxiliary detectors and demodulated for retrieving the physical address information. A problem of the known record carrier and device is that the data capacity of the wobble modulation available for encoding control information is limited.

Document EP 1291854A1, which is used for the two-part form delimitation, describes a recording system on a multilayer record carrier. It is shown that a wobble is present in a data area of the track. Address information is encoded in a header area in embossed pits. The pits are detectable by intensity variations in the scanning beam, whereas the wobble is detectable from other variations in the scanning beam by a sub-segmented detector. Data is recorded in the data area and causes intensity variations.

Document US2003/0007432A1 describes an optical disc comprising a positional information section and a sync mark section each having a wobble pattern. Address information is encoded in a wobbling pregroove. The pregroove is made up of a plurality of unit sections. Each of these unit sections has side faces that are displaced periodically in a disc radial direction. This displacement oscillates at a single period in a tracking direction. However, the displacement pattern differs depending on bits of address information allocated to each of the unit sections. Various forms of wobble modulation are described. The wobble modulation is used to encode address information and auxiliary information, and is detected from variations in the scanning beam in the usual way. Furthermore, main data is recorded in marks causing intensity variations. In addition a sync mark is used, which is constituted by a section in a header area where the pregroove is interrupted. The sync mark indicates the beginning of the address information encoded in the wobble modulation.

Therefore it is an object of the invention to provide a record carrier and a scanning device for accommodating additional control information at a higher data capacity.

According to a first aspect of the invention the object is achieved with a record carrier of a writable type as defined in claim 1.

According to a second aspect of the invention the object is achieved with a device for scanning a track as defined in claim 9.

The effect of the measures is that in addition to the wobble modulation a second, different modulation of the pregroove is available for accommodating auxiliary control information. This has the advantage that a relatively large capacity for storing auxiliary control data is created, e.g. around 1 bit for each wobble period. It is to be noted that traditional wobble modulation as described for example in WO00/43996 may require up to 100 wobble periods for transferring a single bit of additional control information. Hence the recording device according to the invention will read the necessary control data in a much shorter time than control data accommodated in the traditional wobble modulation, which increases the speed of a startup procedure after inserting the record carrier.

The invention is also based on the following recognition. The wobble modulation is suitable for physical address information because such address information is used for locating data sectors (to be) recorded in the track, while the wobble period itself is used for synchronization of speed of rotation and/or of the recording process. Although traditionally some additional data can be accommodated also in the wobble modulation, the need for auxiliary control information has increased greatly in modern recording systems, in particular for high density and multilayer recording systems. The inventors have seen that applying the pregroove modulation which is detectable via the main detector and scanning signal the data capacity can be increased significantly, in particular by using both recording layers.

In an embodiment of the record carrier the pregroove modulation comprises pregroove land areas of zero depth alternating with pregroove pit areas of a predefined depth and width for constituting a pattern of pregroove marks representing the auxiliary control information. This has the advantage that the pattern is produced during manufacture of the record carrier using the same production steps already used for producing the pregroove.

In an embodiment of the record carrier said marks in the track have lengths corresponding to an integer number of channel bit lengths T and the shortest marks having a length of a predefined minimum number d of channel bit lengths T for being detectable via a scanning spot having an effective diameter constituted by said beam on the track, and the pregroove modulation is constituted by a carrier pattern of long pregroove marks, the long pregroove marks having lengths of at least two times the predefined minimum number d of channel bit lengths T for being substantially longer than the effective diameter of the scanning spot. The effect of using the long pregroove marks is that a focus offset is detectable based on the maximum amplitude of the scanning signal. Advantageously adjusting the focus and retrieving the auxiliary information are based on the same area having the pregroove modulation, which increases the startup speed of a device after inserting a record carrier. Surprisingly the focus offset so detected corresponds substantially to the optimum focus offset for reducing errors during reading or recording the marks. The long pregroove marks are substantially longer than the effective diameter of the scanning spot, which effective diameter is effective for reading out marks from at least a predefined minimum size, and is usually defined as the diameter at which the intensity of radiation is down 50% of its peak value. Advantageously only the focus area having the carrier pattern of long marks is needed for maximizing the amplitude during offset adjustment.

In an embodiment of the record carrier each recording layer comprises a disc information area in which area the pregroove exhibits said pregroove modulation, the disc information area being substantially smaller than the recordable area of the recording layer, and in particular the disc information areas of the recording layers being located at corresponding radial positions. This has the advantage that disc information is available for each recording layer individually. Advantageously locating the information areas at corresponding positions reduces the read-out time of the auxiliary control information, because the read head does not need to jump radially when switching layers.

Further preferred embodiments of the record carrier and device according to the invention are given in the further claims.

These and other aspects of the invention will be apparent from and elucidated further with reference to the embodiments described by way of example in the following description and with reference to the accompanying drawings, in which
Figure 1a shows a disc-shaped record carrier (top view),
Figure 1b shows a cross-section taken of the record carrier,
Figure 1c shows an example of a wobble of the track,
Figure 1d shows a wobble having a pregroove modulation by variations of the width,
Figure le shows a wobble having a pregroove modulation by variations of the depth,
Figure 2 shows a scanning device having pregroove demodulation, Figure 3 shows a multilayer optical disc,
Figure 4 shows the focus error signal S-curve,
Figure 5 shows a modulated wobble, a pregroove modulation and a read signal,
Figure 6 shows ADIP information in wobble modulation, and
Figure 7 shows a wobble demodulation unit.
In the Figures, elements which correspond to elements already described have the same reference numerals.

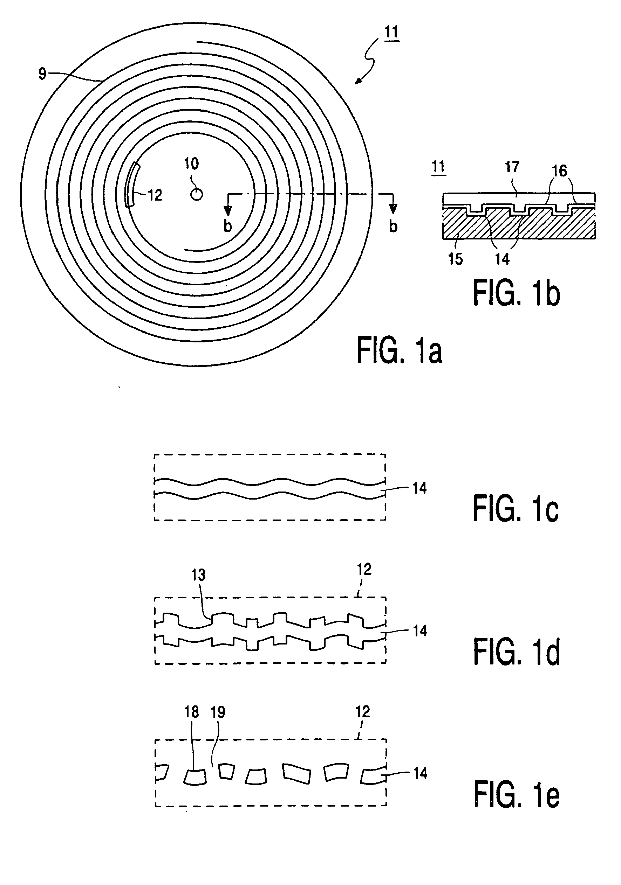

Figure 1a shows a disc-shaped record carrier 11 having a track 9 and a central hole 10. The track 9 is arranged in accordance with a spiral pattern of turns constituting substantially parallel tracks on an information layer. The record carrier may be an optical disc having an information layer of a recordable type. Examples of a recordable disc are the CD-R and CD-RW, and the DVD+RW. The track 9 on the recordable type of record carrier is indicated by a pre-embossed track structure provided during manufacture of the blank record carrier, for example a pregroove. Recorded information is represented on the information layer by optically detectable marks recorded along the track. The marks are constituted by variations of a first physical parameter and thereby have different optical properties than their surroundings. The marks are detectable by variations in the reflected beam, e.g. variations in reflection.

Figure 1b is a cross-section taken along the line b-b of the record carrier 11 of the recordable type, in which a transparent substrate 15 is provided with a recording layer 16 and a protective layer 17. The track structure is constituted, for example, by a pregroove 14 which enables a read/write head to follow the track 9 during scanning. The pregroove 14 may be implemented as an indentation or an elevation, or may consist of a material having a different optical property than the material of the pregroove. The pregroove enables a read/write head to follow the track 9 during scanning. A track structure may also be formed by regularly spread sub-tracks which periodically cause servo signals to occur. The record carrier may be intended to carry real-time information, for example video or audio information, or other information, such as computer data.

Figure 1c shows an example of a wobble of the track. The Figure shows a periodic variation of the lateral position of the track, also called wobble. The variations cause an additional signal to arise in auxiliary detectors, e.g. in the push-pull channel generated by partial detectors in the central spot in a.head of a scanning device. The wobble is, for example, frequency modulated and position information is encoded in the modulation. A comprehensive description of the prior art wobble as shown in Figure 1c in a writable CD system comprising disc information encoded in such a manner can be found in US 4,901,300 (PHN 12.398) and US 5,187,699 (PHQ 88.002).

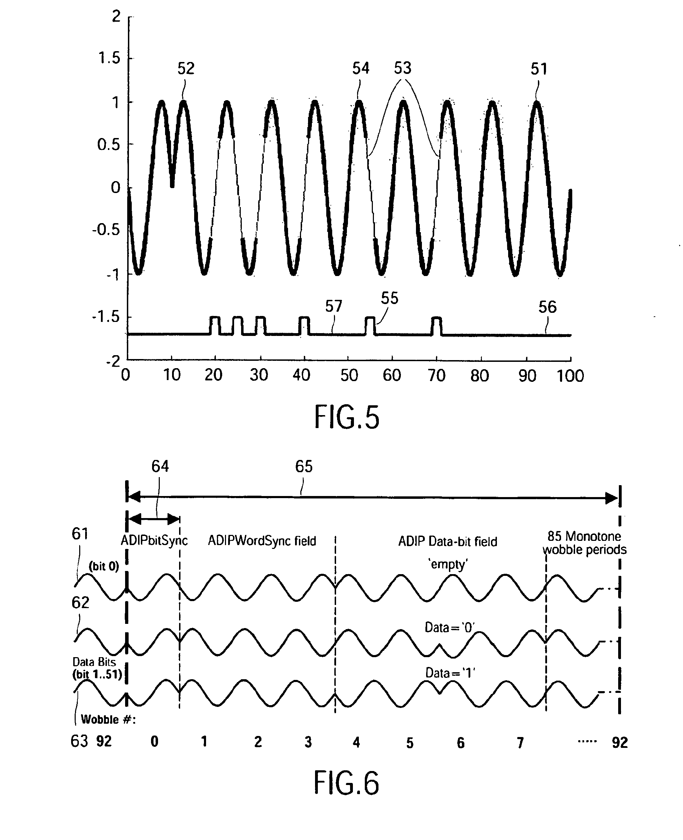

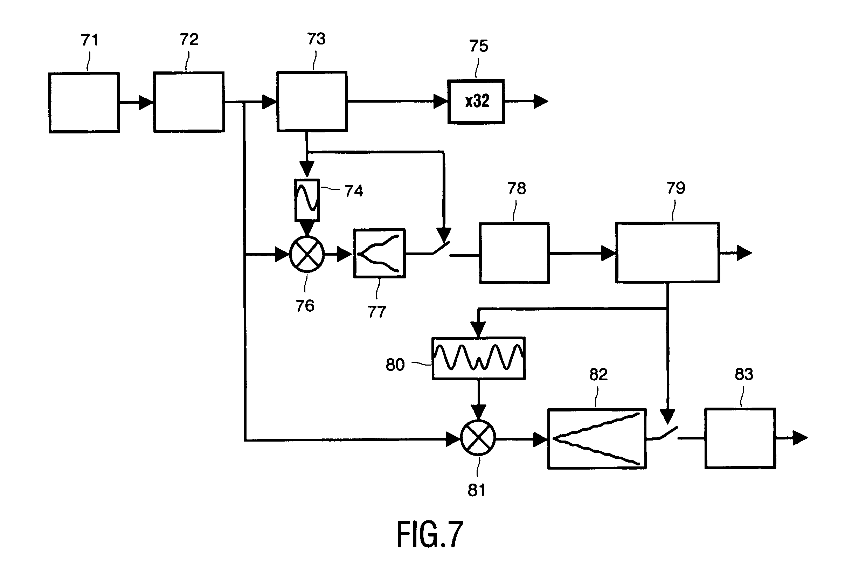

During readout by scanning the wobble modulation is detectable via a second type of variations of the radiation, such as variation of intensity in the cross section of the reflected beam detectable by detector segments or additional detectors for generating tracking servo signals. Detecting the wobble for a tracking servo system is well known from the above mentioned CD-R and CD-RW system. The wobble modulation is used to encode physical addresses, for example as shown in figure 6, while wobble demodulation is shown in figure 7.

User data can be recorded on the record carrier by marks having discrete lengths in unit called channel bits, for example according to the CD or DVD channel coding scheme. The marks are having lengths corresponding to an integer number of channel bit lengths T. The shortest marks that are used have a length of a predefined minimum number d of channel bit lengths T for being detectable via the scanning spot on the track that has an effective diameter, usually being roughly equal to the length of the shortest mark.

According to the invention the record carrier has an auxiliary control area 12 in which the pregroove is modulated for encoding auxiliary control information. In the auxiliary control area 12 the pregroove exhibits a pregroove modulation constituted by variations of a physical parameter related to the shape of the pregroove for representing auxiliary control information. The pregroove modulation is detectable during said scanning by variations of the reflected beam similar to the variations due to the marks in the track that are detectable by variations in the reflected beam, e.g. further variations in reflection.

In an embodiment the auxiliary control area 12 is located at a predefined position on the recording layer. The predefined position is indicated schematically as a part of the track 9 by the rectangle 12 in the Figure, but in practice the auxiliary control area 12 has sufficient length for allowing the auxiliary control information to be encoded, e.g. a few windings of the track. In particular the predefined position may cover a predefined radial range to allow a device to locate the area based on the radial positioning of the optical head without the need to read the addresses in the track.

In an embodiment the auxiliary control area 12 is also arranged as a focus area provided for performing a focus adjustment procedure as discussed below for setting a best focus offset, which results in a low jitter in the read-out signal of the user data. The focus area is provided with a carrier pattern of long marks during manufacture of the record carrier. The carrier pattern is a series of prewritten marks that are long compared to the length of the shortest mark used for user data encoding for being substantially longer than the effective diameter of the scanning spot. In particular the long pregroove marks have lengths of at least two times the predefined minimum number d of channel bit lengths T. The carrier pattern may be constituted by long pregroove marks having a single length, or may be a predefined pattern using a few lengths, or may be randomly varied or may be modulated for encoding the auxiliary control information.

In an embodiment of the invention the shortest marks for recording the main information have a length of a 3 channel bit lengths, usually denoted as d = 3T or 3I. For example in DVD the channel code is an RLL (2,10) code having a minimum length of 3T, and a maximum length of 11T, while marks of 14T are used for synchronization. In such a system the long marks have at least a length of 6T or 7T, but preferably have lengths of at least 8T. A practical single tone carrier pattern has long marks of a single size, e.g. pits and intermediate lands having a length of 11T. It is noted that for a wobble corresponding to a predefined number of channel bit lengths suitable pregroove mark lengths are selected to constitute a pattern fitting that predefined number. For a wobble of 32 channel bits like in DVD+RW, a suitable length is 8T pregroove pits alternating with 8T pregroove lands. Suitable ranges of lengths for encoding information in the long marks are a range of 6T to 14T, or 10T to 12T.

According to the invention the pregroove is provided with a pregroove modulation constituted by variations of a physical parameter related to the shape of the pregroove as discussed below. The pregroove modulation encodes auxiliary control information such as auxiliary control information. It is noted that the auxiliary information may be used for control information that is processed in the scanning apparatus or a host computer, e.g. a code for accessing recorded information, an identifier to support copy-control, anti-piracy information and other accessing mechanisms. The control information in the additional data channel may represent a unique identification code, to protect illegal copying or a watermark. In an embodiment additional information is made available for the user. The additional information may be a software program, e.g. for processing, decompressing or editing audio or video material, or a 'freeware' type version of a software program for the user to try out the functions of said software. In an embodiment the additional information is audio or video content information, such as a trailer of a movie or an MP3 version of some audio. The user may be interested in a full version of the movie or audio. A provider may make available such full versions, e.g. via the internet, which versions can then be downloaded to the record carrier and recorded thereon. Actually retrieving and accessing the full versions from record carrier is controlled via access codes also included in the pregroove modulation. For example the provider may offer to the user the trailer of a few movies or software programs, e.g. 5, and allow the user to record only one of them. The user then pays for one movie when buying the recordable disc. Hence a content provider sells the record carrier with one or more samples of content information, and makes full versions of said samples available to a user, in particular via a network like the internet.

Figure 1d shows a wobble having a pregroove modulation by variations of the width. The Figure shows the wobbled pregroove 14 having a pregroove modulation 13. The shape of the pregroove, being the local cross-sectional shape, is changed according to an additional information signal to be encoded. Such change in shape affects the radiation reflected from the track during scanning, and can be detected thereby. As shown in the Figure the width of the pregroove is modulated according to a digital modulation pattern.

Figure 1e shows a wobble having a pregroove modulation by variations of the depth. As shown the depth is varied digitally for constituting pregroove pit areas 18 having a predefined depth and pregroove land areas 19 having a zero depth (i.e. no pregroove is present). Other variations of depth may be used instead.

For manufacture of such a record carrier a master disc is made. During the mastering process, the pregroove is written by a laser beam recorder. The wobble is made by imposing a small lateral offset of the nominal centre position of the track, and the intensity of the laser power of the mastering laser beam is further modulated to provide the pregroove shape modulation.

The pregroove (width, depth) modulation along the track is used to generate an additional data channel. The unrecorded disc (R or RW type) then contains additional mastered data, for example recording control data. The auxiliary data may be encoded using a channel code similar or equal to the channel code used to encode the main user data. This has the advantage that no additional circuitry is needed for decoding the additional data. In an embodiment a different modulation is used, i.e. a channel modulation code differing from the channel code used to encode the main user data. This allows any modulation to be used for encoding information in the pregroove that is optimized for not disturbing the other properties of the pregroove, e.g. a modulation having 'constant length pulses' encoding the additional data by the position of the pulses. Main user data, also called high-frequency data, may be superimposed on the modulated pregroove. The additional data in the pregroove can be run length-modulated, frequency-modulated, amplitude-modulated, phase-modulated, or any other modulation scheme, which ever is best to distinguish the data from superimposed high-frequency main user data.

In an embodiment of the record carrier of the DVD+R or +RW type the pregroove modulation is applied in a guard or buffer zone in the lead-in zone (other places could be lead out zone and middle zone in dual-layer DVD+R or dual-layer DVD+RW). The continuous pregroove is replaced by pregroove pits and lands of either a single tone or multiple tones. It is noted the ADIP information obtained from the groove is still present and can be read. As an example a two-layer Opposite Track Path DVD+R disc is used. The pregroove pits and lands are placed in the guard zone 3 of the lead in zone of the L0 disc (closest to the laser) and in the lead out zone of the L1 layer (below the lead-in zone of the L0 disc).

In an embodiment of the record carrier windings of the track having the pregroove modulation are alternated with windings of the track having no pregroove modulation or having a different, predefined pregroove modulation. By such a pattern the so-called wobble beat and/or crosstalk of adjacent grooves can be minimized.

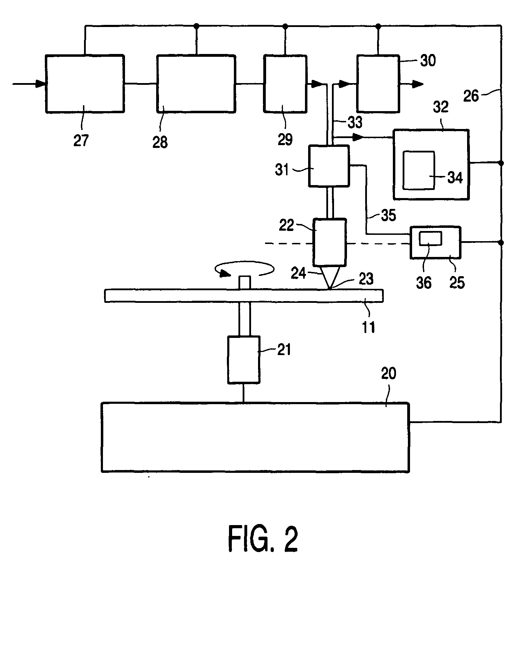

Figure 2 shows a scanning device having pregroove demodulation. The device is provided with means for scanning a track on a record carrier 11 which means include a drive unit 21 for rotating the record carrier 11, a head 22, a servo unit 25 for positioning the head 22 on the track, and a control unit 20. The head 22 comprises an optical system of a known type for generating a radiation beam 24 guided through optical elements focused to a radiation spot 23 on a track of the information layer of the record carrier. The radiation beam 24 is generated by a radiation source, e.g. a laser diode. The head further comprises (not shown) a focusing actuator for moving the focus of the radiation beam 24 along the optical axis of said beam and a tracking actuator for fine positioning of the spot 23 in a radial direction on the center of the track. The tracking actuator may comprise coils for radially moving an optical element or may alternatively be arranged for changing the angle of a reflecting element. The focusing and tracking actuators are driven by actuator signals from the servo unit 25. For reading the radiation reflected by the information layer is detected by a detector of a usual type, e.g. a four-quadrant diode, in the head 22 for generating detector signals coupled to a front-end unit 31 for generating various scanning signals, including a main scanning signal 33 and error signals 35 for tracking and focusing. The error signals 35 are coupled to the servo unit 25 for controlling said tracking and focusing actuators. The error signals 35 are also coupled to a wobble demodulation unit 36 for retrieving the physical addresses from the wobble modulation. A detailed embodiment of wobble detection is given in Figure 7. The main scanning signal 33 is processed by read processing unit 30 of a usual type including a demodulator, deformatter and output unit to retrieve the information.

The control unit 20 controls the scanning and retrieving of information and may be arranged for receiving commands from a user or from a host computer. The control unit 20 is connected via control lines 26, e.g. a system bus, to the other units in the device. The control unit 20 comprises control circuitry, for example a microprocessor, a program memory and interfaces for performing the procedures and functions as described below. The control unit 20 may also be implemented as a state machine in logic circuits. In an embodiment the control unit performs the functions of retrieving the additional information from the pregroove via the read processing unit 30.

The device has a pregroove demodulation unit 32 for detecting pregroove modulation in the scanning signal as follows. The main scanning signal 33 is received from the front-end unit 31. Components in the signal 33 due to the marks of the main information are removed and components due to the marks of the pregroove modulation are isolated. In an embodiment the demodulation unit has a filter unit 34 that has a low pass or band pass function specifically tuned to the long marks. Auxiliary control information is retrieved from the pregroove modulation by the pregroove demodulation unit 32. Timing recovery for reconstructing a data clock of the auxiliary signal can be based on the wobble frequency or on the pregroove modulation itself. In an embodiment timing recovery is based on the data clock retrieved for the main data. Synchronous detection can be applied for detecting the data bits of the auxiliary data. In an embodiment the pregroove modulation is provided with a channel code and/or error correction codes different from the channel codes used in the user data, and the demodulation unit 34 is provided with a dedicated channel code demodulator and/or error correction unit

In an embodiment the device is provided with recording means for recording information on a record carrier of a writable or re-writable type, for example CD-R or CD-RW, or DVD+RW or BD. The recording means cooperate with the head 22 and front-end unit 31 for generating a write beam of radiation, and comprise write processing means for processing the input information to generate a write signal to drive the head 22, which write processing means comprise an input unit 27, a formatter 28 and a modulator 29. For writing information the beam of radiation is controlled to create optically detectable marks in the recording layer. The marks may be in any optically readable form, e.g. in the form of areas with a reflection coefficient different from their surroundings, obtained when recording in materials such as dye, alloy or phase change material, or in the form of areas with a direction of polarization different from their surroundings, obtained when recording in magneto-optical material.

Writing and reading of information for recording on optical disks and formatting, error correcting and channel coding rules are well-known in the art, e.g. from the CD or DVD system. In an embodiment the input unit 27 comprises compression means for input signals such as analog audio and/or video, or digital uncompressed audio/video. Suitable compression means are described for video in the MPEG standards, MPEG-1 is defined in ISO/IEC 11172 and MPEG-2 is defined in ISO/IEC 13818. The input signal may alternatively be already encoded according to such standards.

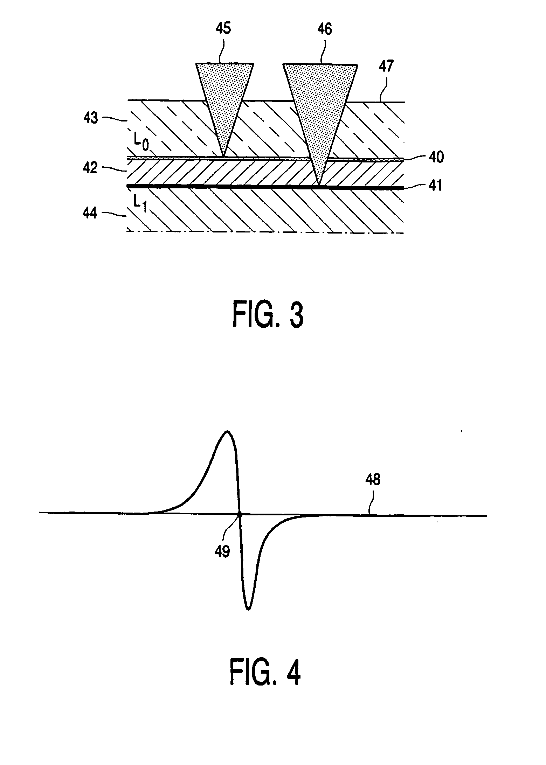

Figure 3 shows a multilayer optical disc. L0 is a first recording layer 40 and L 1 is a second recording layer 41. A first transparent layer 43 covers the first recording layer, a spacer layer 42 separates both recording layers 40,41 and a substrate layer 44 is shown below the second recording layer 41. The first recording layer 40 is located at a position closer to an entrance face 47 of the record carrier than the second recording layer 41. A laser beam is shown in a first state 45 focused on the L0 layer and the laser beam is shown in a second state 46 focused at the L 1 layer. Each recording layer has the pattern of pregroove marks that encodes auxiliary control information.

Multilayer discs are already available as read-only pre-recorded discs, such as DVD-ROM or DVD-Video. A dual layer DVD+R disc has recently been suggested, which disc should preferably be compatible with the dual layer DVD-ROM standard. The reflection levels of both layers are >18%. The L0 layer has a transmission around 50-70 %. A spacer layer separates the layers with a typical thickness between 30 and 60 µm. The L1 layer has a high reflection and needs to be very sensitive. Also rewritable dual-layer discs are proposed. The L0 layer has a transmission around 40-60 %. The effective reflection of both layers is typically 7% although lower and higher values are possible (3% - 18%). Writable and rewritable optical storage media having 3 or more recording layers are considered also.

Figure 4 shows the focus error signal S-curve. The focus error signal 48 is shown for a focus varied from below to above a recording layer. For example in single layer +RW and ROM, the optimal focus-offset is found by keeping the focus-error at the zero crossing 49 of the S-curve. Additional fine-tuning may be provided by optimizing on pre-recorded data (in the case of the ROM disc). In dual layer DVD-ROM (DVD-9), the optimal focus-offset is found by keeping the focus-error at the zero crossing of the S-curve and then further optimizing on jitter. Here, the optimal focus-offset suffers from stray light from the other out-of focus layer and/or and from optical aberrations due to the non-ideal depth of the in-focus layer but this can be compensated by optimizing on jitter. In dual layer DVD+R/+RW no pre-recorded data is available to optimize the jitter values.

In an embodiment the device has a focus adjustment function included in the focus servo unit 25. First a focus area constituted by an area of the pregroove having the pregroove modulation is detected. Then the best focus is detected by scanning the carrier pattern in the focus area and monitoring the amplitude of the scanning signal due to said long marks. In particular a maximum of the amplitude is found by varying the focus offset. The focus adjustment unit may also be implemented as a software function in the control unit 20, using the read circuitry available in the read unit 30 for detecting the amplitude of the signal due to the long pregroove marks. In an embodiment the focus adjustment function is performed for a multilayer disc for each of the relevant layers separately. The focus area on the respective layer is located, and the further steps are performed as indicated above for the first layer. Finding the right focus offset is important for writing recordable and rewritable discs. With a non-optimal focus offset the data is written on the disc in a non-optimal manner, leading to increased write power and jitter values (especially during read out).

Figure 5 shows a modulated wobble, a pregroove modulation and a read signal. The x-axis shows time and the y-axis shows the signal values. An upper curve 51 shows the wobble as a signal deviating in a radial direction from a nominal zero position. The phase of the wobble is modulated for encoding physical addresses as indicated by the phase reversal 52. The wobble modulation represents physical address information indicating the physical position of the respective physical address with respect to a starting point of the track The wobble modulation is known for example from DV+RW and is described in detail in WO00/43996. According to the invention the pregroove constituting the wobble is modulated by alternating pregroove land areas 53 and pregroove pit areas 54. The lower curve 56 shows the resulting read signal usually called central aperture (CA) signal generated by a detector in the read head. The signal is caused by the difference in reflection of pregroove pits (groove reflection level) and pregroove lands (mirror type reflection level). The signal is comparable to the difference in reflection between a groove and a mirror area on the disc (typically 10-15% of the reflection level). Alternatively other methods can be employed for read out, e.g. radial and tangential push pull. It is noted that the wobble period or modulation cannot be detected from the CA read signal, but the pregroove land areas 53 result in pulses 55 in the CA signal, while the intermediate signal parts 57 are interpreted as being due to pregroove pits. Demodulating the pregroove signal elements 55, 57 due to the pregroove modulation is relatively straightforward. In an embodiment the pregroove signal elements are directly linked to the wobble PLL clock. Simple filtering and threshold detection can be employed. When the pits are large (> 8T), inter symbol interference is negligible and the frequency and the magnitude of the signal are fixed. Channel bits demodulated from the signal are decoded to the auxiliary information according to a channel coding algorithm, for example the same channel coding as used for the main data in the CD or DVD system. In an embodiment a dedicated channel coding algorithm is used for encoding the auxiliary information in the pregroove land and pit areas, which algorithm for example only uses pregroove mark lengths of 10 to 14 channel bits.

In an embodiment the pregroove modulation is aligned with the wobble modulation. As shown in figure 5 the pregroove pit and land areas are aligned to the sine wave shape of the wobble. The lengths of the pregroove marks are selected to allow pregroove modulation patterns that fit within the lengths of the wobble period. Alternatively the pregroove modulation is aligned to wobble parts that constitute critical elements of the wobble modulation like the phase reversal 52, in particular such critical wobble parts not containing pregroove modulation.

Figure 6 shows ADIP information in wobble modulation. The wobble modulation encodes additional information that is called Address In Pregroove (ADIP) in the DVD+RW system. Each ADIP bit 65 is constituted by ADIP bit sync (one wobble period 64 corresponding to 32 channel bits), followed by a ADIP word sync field (3 wobble periods) and the ADIP Data-bit field of 4 wobble periods, followed finally by 85 monotone (i.e. not modulated) wobble periods. The Figure shows a first wobble 61 which is encoded as an ADIP word sync, in which the word sync field has inverted wobbles and the data-bit field has non modulated wobbles. Second wobble 62 encode a data bit value 0 and third wobble 63 encodes a data bit of value 1.

Figure 7 shows a wobble demodulation unit. The input unit 71 provides a push-pull signal derived from the head scanning the track. A filter 72 filters the signal by high pass and low pass filters for isolating the wobble frequency and generating a wobble signal. A phase locked loop 73 is locked to the wobble frequency, and generates via a 32x multiplier 75 the synchronous write clock for recording marks in units of channel bits. A synchronous wobble unit 74 provides a wobble clock period to multiplier 76 which also receives the wobble signal. The output of the multiplier 76 is integrated in integrate and dump unit 77, of which the output is samples via a sample switch to a sync threshold detector 78 coupled to a ADIP bit synchronizer that detects the ADIP bit syncs. A second multiplier 81 is provided with a 4 wobble period signal having two inverted and two non inverted wobbles and the wobble signal on a second input for synchronous detection over 4 wobble periods. A second integrate and dump unit 82 integrates output signal of the multiplier 82, while a bit value threshold detector 83 for detecting the values of the encoded bits.

Although the invention has been mainly explained by embodiments using optical discs based on change of reflection, the invention is also suitable for other record carriers such as rectangular optical cards, magneto-optical discs or any other type of information storage system that has a pre-applied pattern on a writable record carrier. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software.

## Claims

1. Record carrier of a writable type for recording information by writing marks in a track on a recordable area of a recording layer via a beam of radiation entering through an entrance face of the record carrier, the marks for being detectable causing, during scanning the track via the beam, variations of a first type in the radiation, the record carrier comprising
- at least a first recording layer (40) and a second recording layer (41), the first recording layer being present at a position closer to the entrance face than the second recording layer, and
- at least one transparent spacer layer (42) between the recording layers, and
- each layer comprising a pregroove (14) indicating the position of the track, the pregroove exhibiting a wobble constituted by displacements of the pregroove in a direction transverse to the longitudinal direction of the track,
the wobble exhibiting a wobble modulation and the pregroove exhibiting a pregroove modulation (13) constituted by variations of a physical parameter related to the shape of the pregroove,
the wobble modulation for being detectable causing, during said scanning, variations of a second type in the radiation and the pregroove modulation for being detectable causing, during said scanning, further variations of the first type,
**characterized by**
the wobble modulation representing physical address information indicating the physical position of the physical address with respect to a starting point of the track and the pregroove modulation (13) being constituted by variations of the depth or width of the wobble, the pregroove modulation representing auxiliary control information.

2. Record carrier as claimed in claim 1, wherein the variations of the first type are variations of intensity due to variations of a reflection level of the track.

3. Record carrier as claimed in claim 1, wherein the pregroove modulation comprises pregroove land areas (19) of zero depth alternating with pregroove pit areas (18) of a predefined depth and width for constituting a pattern of pregroove marks representing the auxiliary control information.

4. Record carrier as claimed in claim 1, wherein said marks in the track have lengths corresponding to an integer number of channel bit lengths T and the shortest marks having a length of a predefined minimum number d of channel bit lengths T for being detectable via a scanning spot having an effective diameter constituted by said beam on the track, and the pregroove modulation is constituted by a carrier pattern of long pregroove marks, the long pregroove marks having lengths of at least two times the predefined minimum number d of channel bit lengths T for being substantially longer than the effective diameter of the scanning spot.

5. Record carrier as claimed in claim 4, wherein the predefined minimum number d is 3 channel bit lengths T (d = 3T), and the long marks have lengths of at least 6T, in particular the lengths being in the range of 8T to 14T.

6. Record carrier as claimed in claim 3 or 4, wherein the pregroove modulation is representing the auxiliary control information encoded by the pregroove marks according to a predefined channel coding algorithm, which predefined channel coding algorithm differs from a channel coding algorithm for encoding the information in the marks in the track.

7. Record carrier as claimed in claim 1, wherein the pregroove modulation is aligned with the wobble modulation.

8. Record carrier as claimed in claim 1 or 2, wherein each recording layer comprises a disc information area (12) in which area the pregroove exhibits said pregroove modulation, the disc information area being substantially smaller than the recordable area of the recording layer, and the disc information areas of the recording layers being located at substantially corresponding radial positions.

9. Device for scanning a track on a record carrier (11) via a beam of radiation (24), the track comprising marks on a recordable area of a recording layer,
the beam entering through an entrance face of the record carrier and constituting a scanning spot having an effective diameter on the track,
the record carrier comprising
- at least a first recording layer (40) and a second recording layer (41), the first recording layer being present at a position closer to the entrance face than the second recording layer, and
- at least one transparent spacer layer (42) between the recording layers, and
- each layer comprising a pregroove indicating the position of the track, the pregroove exhibiting a wobble constituted by displacements of the pregroove in a direction transverse to the longitudinal direction of the track, the wobble exhibiting a wobble modulation and the pregroove exhibiting a pregroove modulation constituted by variations of a physical parameter related to the shape of the pregroove, and
the device comprises
- a head (22) for providing the beam,
- a front-end unit (31) for generating a scanning signal (33) for detecting marks in the track by detecting scanning signal variations due to variations of a first type in the radiation,
**characterized in that**, on the record carrier,
the wobble modulation is representing physical address information indicating the physical position of the physical address with respect to a starting point of the track, and the pregroove modulation is representing auxiliary control information, and **in that**
the device comprises
- wobble detection means (36) for retrieving the physical address information from the wobble modulation by detecting a variations of a second type in the radiation, and
- pregroove demodulation means (32) for retrieving the auxiliary control information from the pregroove modulation on the first and the second recording layer by detecting further scanning signal variations due to the pregroove modulation (13) being constituted by variations of the depth or width of the wobble.

10. Device as claimed in claim 9, wherein, while on the record carrier said marks have lengths corresponding to an integer number of channel bit lengths T and the shortest marks having a length of a predefined minimum number d of channel bit lengths T for being detectable via the scanning spot having the effective diameter, and the pregroove modulation is constituted by a carrier pattern of long pregroove marks, the long pregroove marks having lengths of at least two times the predefined minimum number d of channel bit lengths T for being substantially longer than the effective diameter of the scanning spot,
the pregroove demodulation means (32) are arranged for detecting the further scanning signal variations due to the long pregroove marks.

11. Device as claimed in claim 9 or 10, wherein the pregroove demodulation means (32) are arranged for retrieving the auxiliary control information encoded in the pregroove modulation according to a predefined channel coding algorithm, which predefined channel coding algorithm differs from a channel coding algorithm for encoding the information in the marks in the track.

12. Device as claimed in claim 9, 10 or 11, wherein the device comprises a control unit (20) for first retrieving the auxiliary control information via the pregroove demodulation means (32) and subsequently recording the auxiliary control information in a control area of the record carrier.

## Patentansprüche

1. Aufzeichnungsträger vom beschreibbaren Typ zum Aufzeichnen von Information durch Schreiben von Marken in einer Spur auf einem beschreibbaren Gebiet einer Aufzeichnungsschicht mittels eines Bündels von Strahlung, die durch eine Eintrittsfläche des Aufzeichnungsträgers eintritt, wobei die Marken, um detektierbar zu sein, während des Abtastens der Spur mittels des Strahlenbündels Veränderungen eines ersten Typs in der Strahlung verursachen, wobei der Aufzeichnungsträger Folgendes umfasst:
- zumindest eine erste Aufzeichnungsschicht (40) und eine zweite Aufzeichnungsschicht (41), wobei sich die erste Aufzeichnungsschicht an einer Position näher bei der Eintrittsfläche befindet als an die zweite Aufzeichnungsschicht, und
- zumindest eine transparente Abstandsschicht (42) zwischen den Aufzeichnungsschichten, und
- wobei jede Schicht eine Vorrille (14) umfasst, die die Position der Spur angibt, wobei die Vorrille einen durch Verlagerungen der Vorrille in einer Richtung quer zur Längsrichtung der Spur gebildeten Wobble aufweist,
wobei der Wobble eine Wobblemodulation und die Vorrille eine Vorrillenmodulation (13) aufweist, gebildet durch Veränderungen eines mit der Form der Vorrille zusammenhängenden physikalischen Parameters,
wobei die Wobblemodulation, um detektierbar zu sein, während des genannten Abtastens Veränderungen eines zweiten Typs in der Strahlung verursacht und die Vorrillenmodulation, um detektierbar zu sein, während des genannten Abtastens weitere Veränderungen des ersten Typs verursacht,
**dadurch gekennzeichnet, dass**
die Wobblemodulation physikalische Adressinformation repräsentiert, die die physikalische Position der physikalischen Adresse in Bezug auf einen Anfangspunkt der Spur angibt, und die Vorrillenmodulation (13) durch Veränderungen der Tiefe oder Breite des Wobble gebildet wird, wobei die Vorrillenmodulation Hilfssteuerinformation repräsentiert.

2. Aufzeichnungsträger nach Anspruch 1, in dem die Veränderungen des ersten Typs Intensitätsveränderungen infolge von Veränderungen eines Reflexionsgrades der Spur sind.

3. Aufzeichnungsträger nach Anspruch 1, in dem die Vorrillenmodulation Vorrillen-Landgebiete (19) der Tiefe Null umfasst, die mit Vorrillen-Pitgebieten (18) einer zuvor definierten Tiefe und Breite abwechseln, um ein Muster aus Vorrillenmarken zu bilden, das die Hilfssteuerinformation repräsentiert.

4. Aufzeichnungsträger nach Anspruch 1, in dem die genannten Marken in der Spur Längen haben, die einer ganzen Zahl von Kanalbitlängen T entsprechen, und wobei die kürzesten Marken eine Länge von einer zuvor definierten minimalen Zahl d von Kanalbitlängen T haben, um mittels eines von dem genannten Strahlenbündel auf der Spur gebildeten Abtastflecks, der einen effektiven Durchmesser hat, detektierbar zu sein, und die Vorrillenmodulation von einem Trägermuster aus langen Vorrillenmarken gebildet wird, wobei die langen Vorrillenmarken Längen haben, die zumindest zwei Mal so groß wie die zuvor definierte minimale Zahl d von Kanalbitlängen T sind, um wesentlich länger zu sein als der effektive Durchmesser des Abtastflecks.

5. Aufzeichnungsträger nach Anspruch 4, in dem die zuvor definierte minimale Zahl d 3 Kanalbitlängen T (d = 3T) beträgt und die langen Marken Längen von zumindest 6T haben, wobei die Längen insbesondere im Bereich 8T bis 14T liegen.

6. Aufzeichnungsträger nach Anspruch 3 oder 4, in dem die Vorrillenmodulation die durch die Vorrillenmarken gemäß einem zuvor definierten Kanalcodierungsalgorithmus codierte Hilfssteuerinformation repräsentiert, welcher zuvor definierte Kanalcodierungsalgorithmus sich von einem Kanalcodierungsalgorithmus zum Codieren der Information in den Marken in der Spur unterscheidet.

7. Aufzeichnungsträger nach Anspruch 1, in dem die Vorrillenmodulation an die Wobblemodulation angepasst ist.

8. Aufzeichnungsträger nach Anspruch 1 oder 2, in dem jede Aufzeichnungsschicht ein Platteninformationsgebiet (12) umfasst, in welchem Gebiet die Vorrille die genannte Vorrillenmodulation aufweist, wobei das Platteninformationsgebiet wesentlich kleiner als das beschreibbare Gebiet der Aufzeichnungsschicht ist und die Platteninformationsgebiete der Aufzeichnungsschichten an im Wesentlichen entsprechenden radialen Positionen liegen.

9. Einrichtung zum Abtasten einer Spur auf einem Aufzeichnungsträger (11) mittels eines Bündels von Strahlung (24), wobei die Spur Marken auf einem beschreibbaren Gebiet einer Aufzeichnungsschicht umfasst,
wobei das Strahlenbündel durch eine Eintrittsfläche des Aufzeichnungsträgers eintritt und auf der Spur einen Abtastfleck mit einem effektiven Durchmesser bildet,
wobei der Aufzeichnungsträger Folgendes umfasst:
- zumindest eine erste Aufzeichnungsschicht (40) und eine zweite Aufzeichnungsschicht (41), wobei die erste Aufzeichnungsschicht sich an einer Position näher bei der Eintrittsfläche befindet als an die zweite Aufzeichnungsschicht und
- zumindest eine transparent Abstandsschicht (42) zwischen den Aufzeichnungsschichten und
- wobei jede Schicht eine Vorrille umfasst, die die Position der Spur angibt, wobei die Vorrille einen durch Verlagerungen der Vorrille in einer Richtung quer zur Längsrichtung der Spur gebildeten Wobble aufweist, wobei der Wobble eine Wobblemodulation und die Vorrille eine Vorrillenmodulation aufweist, gebildet durch Veränderungen eines mit der Form der Vorrille zusammenhängenden physikalischen Parameters und die Einrichtung Folgendes umfasst:
- einen Kopf (22) zum Verschaffen des Strahlenbündels,
- eine Vorfeldeinheit (31) zum Generieren eines Abtastsignals (33), um durch Detektieren von Abtastsignalveränderungen infolge von Veränderungen eines ersten Typs in der Strahlung Marken in der Spur zu detektieren,
**dadurch gekennzeichnet, dass** auf dem Aufzeichnungsträger
- die Wobblemodulation physikalische Adressinformation repräsentiert, die die physikalische Position der physikalischen Adresse in Bezug auf einen Anfangspunkt der Spur angibt, und die Vorrillenmodulation Hilfssteuerinformation repräsentiert und dass die Einrichtung Folgendes umfasst
- Wobbledetektionsmittel (36) zum Rückgewinnen der physikalischen Adressinformation aus der Wobblemodulation durch Detektieren von Veränderungen eines zweiten Typs in der Strahlung und
- Vorrillendemodulationsmittel (32) zum Rückgewinnen der Hilfssteuerinformation aus der Vorrillenmodulation auf der ersten und der zweiten Aufzeichnungsschicht durch Detektieren weiterer Abtastsignalveränderungen infolge der Vorrillenmodulation (13), die durch Veränderungen der Tiefe oder Breite des Wobble gebildet werden.

10. Einrichtung nach Anspruch 9, bei der, während auf dem Aufzeichnungsträger, die genannten Marken Längen haben, die einer ganzen Zahl von Kanalbitlängen T entsprechen, und wobei die kürzesten Marken eine Länge von einer zuvor definierten minimalen Zahl d von Kanalbitlängen T haben, um mittels des Abtastflecks, der den effektiven Durchmesser hat, detektierbar zu sein, und die Vorrillenmodulation von einem Trägermuster aus langen Vorrillenmarken gebildet wird, wobei die langen Vorrillenmarken Längen haben, die zumindest zwei Mal so groß wie die zuvor definierte minimale Zahl d von Kanalbitlängen T sind, um wesentlich länger zu sein als der effektive Durchmesser des Abtastflecks,
wobei die Vorrillendemodulationsmittel (32) angeordnet sind, um die weiteren Abtastsignalveränderungen infolge der langen Vorrillenmarken zu detektieren.

11. Einrichtung nach Anspruch 9 oder 10, bei der die Vorrillendemodulationsmittel (32) angeordnet sind, um die in der Vorrillenmodulation gemäß einem zuvor definierten Kanalcodierungsalgorithmus codierte Hilfssteuerinformation zurückzugewinnen, welcher zuvor definierte Kanalcodierungsalgorithmus sich von einem Kanalcodierungsalgorithmus zum Codieren der Information in den Marken in der Spur unterscheidet.

12. Einrichtung nach Anspruch 9, 10 oder 11, wobei die Einrichtung eine Steuereinheit (20) umfasst, um erst die Hilfssteuerinformation mittels der Vorrillendemodulationsmittel (32) zurückzugewinnen und anschließend die Hilfssteuerinformation in einem Steuergebiet des Aufzeichnungsträgers aufzuzeichnen.

## Revendications

1. Support d'enregistrement d'un type inscriptible pour enregistrer des informations en écrivant des marques dans une piste sur une zone enregistrable d'une couche d'enregistrement par le biais d'un faisceau de rayonnement entrant par une face d'entrée du support d'enregistrement, les marques étant détectables, amenant, pendant le balayage de la piste par le biais du faisceau, des variations d'un premier type dans le rayonnement, le support d'enregistrement comprenant :
- au moins une première couche d'enregistrement (40) et une deuxième couche d'enregistrement (41), la première couche d'enregistrement étant présente dans une position plus proche de la face d'entrée que la deuxième couche d'enregistrement, et
- au moins une couche de séparation transparente (42) entre les couches d'enregistrement, et
- chaque couche comprenant un pré-sillon (14) indiquant la position de la piste, le pré-sillon présentant une oscillation formée par des déplacements du pré-sillon dans un sens transversal par rapport au sens longitudinal de la piste ;
l'oscillation présentant une vobulation et le pré-sillon présentant une modulation de pré-sillon (13) formée par des variations d'un paramètre physique lié à la forme du pré-sillon ;
la vobulation étant détectable, amenant, pendant ledit balayage, des variations d'un deuxième type dans le rayonnement et la modulation de pré-sillon, étant détectable, amenant, pendant ledit balayage, des variations supplémentaires du premier type ;
**caractérisé par**
la vobulation représentant des informations d'adresse physique indiquant la position physique de l'adresse physique par rapport à un début de la piste et la modulation de pré-sillon (13) étant formée par des variations de la profondeur ou de la largeur de l'oscillation, la modulation de pré-sillon représentant des informations de commande auxiliaires.

2. Support d'enregistrement suivant la revendication 1, dans lequel les variations du premier type sont des variations de l'intensité dues à des variations d'un niveau de réflexion de la piste.

3. Support d'enregistrement suivant la revendication 1, dans lequel la modulation de pré-sillon comprend des zones de méplat de pré-sillon (19) d'une profondeur nulle alternant avec des zones de creux de pré-sillon (18) d'une profondeur et d'une largeur prédéfinies pour former un motif de marques de pré-sillon représentant les informations de commande auxiliaires.

4. Support d'enregistrement suivant la revendication 1, dans lequel lesdites marques dans la piste ont des longueurs correspondant à un nombre entier de longueurs de bit de canal T et les marques les plus courtes ayant une longueur d'un nombre minimum prédéfini d de longueurs de bit de canal T, étant détectables par le biais d'un point lumineux de balayage ayant un diamètre effectif formé par ledit faisceau sur la piste, et la modulation de pré-sillon est formée par un motif de support de longues marques de pré-sillon, les longues marques de pré-sillon ayant des longueurs correspondant au double au moins du nombre minimum prédéfini d de longueurs de bit de canal T, étant sensiblement plus longues que le diamètre effectif du point lumineux de balayage.

5. Support d'enregistrement suivant la revendication 4, dans lequel le nombre minimum prédéfini d est 3 longueurs de bit de canal T (d=3T), et les longues marques ont des longueurs de 6T au moins, en particulier des longueurs se trouvant dans l'intervalle compris entre 8T et 14T.

6. Support d'enregistrement suivant la revendication 3 ou 4, dans lequel la modulation de pré-sillon représente les informations de commande auxiliaires codées par les marques de pré-sillon selon un algorithme de codage de canal prédéfini, lequel algorithme de codage de canal prédéfini diffère d'un algorithme de codage de canal pour coder les informations dans les marques dans la piste.

7. Support d'enregistrement suivant la revendication 1, dans lequel la modulation de pré-sillon est alignée sur la vobulation.

8. Support d'enregistrement suivant la revendication 1 ou 2, dans lequel chaque couche d'enregistrement comprend une zone d'informations sur le disque (12), zone dans laquelle le pré-sillon présente ladite modulation de pré-sillon, la zone d'informations sur le disque étant sensiblement plus petite que la zone enregistrable de la couche d'enregistrement, et les zones d'informations sur le disque des couches d'enregistrement se trouvant dans des positions radiales sensiblement correspondantes.

9. Dispositif pour balayer une piste sur un support d'enregistrement (11) par le biais d'un faisceau de rayonnement (24), la piste comprenant des marques sur une zone enregistrable d'une couche d'enregistrement ;
le faisceau entrant par une face d'entrée du support d'enregistrement et formant un point lumineux de balayage ayant un diamètre effectif sur la piste ;
le support d'enregistrement comprenant :
- au moins une première couche d'enregistrement (40) et une deuxième couche d'enregistrement (41), la première couche d'enregistrement étant présente dans une position plus proche de la face d'entrée que la deuxième couche d'enregistrement, et
- au moins une couche de séparation transparente (42) entre les couches d'enregistrement, et
- chaque couche comprenant un pré-sillon indiquant la position de la piste, le pré-sillon présentant une oscillation formée par des déplacements du pré-sillon dans un sens transversal par rapport au sens longitudinal de la piste, l'oscillation présentant une vobulation et le pré-sillon présentant une modulation de pré-sillon formée par des variations d'un paramètre physique lié à la forme du pré-sillon, et
le dispositif comprend
- une tête (22) pour fournir le faisceau ;
- une unité frontale (31) pour générer un signal de balayage (33) pour détecter des marques dans la piste en détectant des variations du signal de balayage dues à des variations d'un premier type dans le rayonnement ;
**caractérisé en ce que**, sur le support d'enregistrement,
la vobulation représente des informations d'adresse physique indiquant la position physique de l'adresse physique par rapport à un début de la piste, et la modulation de pré-sillon représente des informations de commande auxiliaires, et **en ce que**
le dispositif comprend
- des moyens de détection d'oscillation (36) pour extraire les informations d'adresse physique de la vobulation en détectant des variations d'un deuxième type dans le rayonnement, et
- des moyens de démodulation de pré-sillon (32) pour extraire les informations de commande auxiliaires de la modulation de pré-sillon sur la première couche d'enregistrement et la deuxième couche d'enregistrement en détectant des variations du signal de balayage supplémentaires dues à la modulation de pré-sillon (13) étant formées par des variations de la profondeur ou de la largeur de l'oscillation.

10. Dispositif suivant la revendication 9, dans lequel, tandis qu'elles se trouvent sur le support d'enregistrement, lesdites marques ont des longueurs correspondant à un nombre entier de longueurs de bit de canal T et les marques les plus courtes ayant une longueur d'un nombre minimum prédéfini d de longueurs de bit de canal T, étant détectables par le biais du point lumineux de balayage ayant le diamètre effectif, et la modulation de pré-sillon est formée par un motif de support de longues marques de pré-sillon, les longues marques de pré-sillon ayant des longueurs correspondant au double au moins du nombre minimum prédéfini d de longueurs de bit de canal T, étant sensiblement plus longues que le diamètre effectif du point lumineux de balayage ;
les moyens de démodulation de pré-sillon (32) sont à même de détecter les variations de signal de balayage supplémentaires dues aux longues marques de pré-sillon.

11. Dispositif suivant la revendication 9 ou 10, dans lequel les moyens de démodulation de pré-sillon (32) sont à même d'extraire les informations de commande auxiliaires codées dans la modulation de pré-sillon selon un algorithme de codage de canal prédéfini, lequel algorithme de codage de canal prédéfini diffère d'un algorithme de codage de canal pour coder les informations dans les marques dans la piste.

12. Dispositif suivant la revendication 9, 10 ou 11, dans lequel le dispositif comprend une unité de commande (20) pour, d'abord, extraire les informations de commande auxiliaires par le biais des moyens de démodulation de pré-sillon (32) et, ensuite, enregistrer les informations de commande auxiliaires dans une zone de commande du support d'enregistrement.
